# EUROPEAN PATENT APPLICATION

(11) **EP 4 411 658 A1**
(43) Date of publication of application: **07.08.2024**
(21) Application number: 22872412.6
(22) Date of filing: 15.03.2022
(51) Int. Cl.: G06T 19/00

(54) **INFORMATION PROCESSING DEVICE AND INFORMATION PROCESSING METHOD**

(30) Priority: 27.09.2021 JP 2021156929
(71) Applicant: Sony Semiconductor Solutions Corporation, Atsugi-shi, Kanagawa 243-0014 (JP)
(72) Inventor: MATSUMORI, Go, Atsugi-shi, Kanagawa 243-0014 (JP); TSUJI, Kouki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/011732
(87) International publication number: WO 2023/047653

(57) **Abstract**

An information processing apparatus according to the present technology includes a display processing unit that performs display processing of map data indicating a three-dimensional structure of a target space, the map data being generated on the basis of sensing information by at least one of a visible light camera or a distance measuring sensor, in which the display processing unit performs display processing of the map data on the basis of sensing information by a third sensor that is a sensor excluding the visible light camera and the distance measuring sensor.

## Description

### TECHNICAL FIELD

The present technology relates to an information processing apparatus and a method thereof, and particularly relates to a display processing technology for map data indicating a three-dimensional structure of a target space generated on the basis of sensing information by at least one of a visible light camera or a distance measuring sensor.

### BACKGROUND ART

For example, map data indicating a three-dimensional structure of a target space is generated by a technique such as simultaneous localization and mapping (SLAM). In SLAM, for example, map data is generated by scanning a target space using both or any one of a visible light camera such as an RGB camera and a distance measuring sensor such as a light detection and ranging (LiDAR) sensor or a time of flight (ToF) sensor.

The map data obtained by scanning the target space in this manner can be used for various services. As an example, a service for providing augmented reality (AR) content to a user located in a target space can be mentioned. In this case, presenting a virtual object at a predetermined position in the target space on the basis of the map data, presenting a predetermined virtual object with a fact that the user is positioned at a predetermined position in the target space as a trigger, and the like are conceivable.

Note that Patent Document 1 below can be cited as a related art. Patent Document 1 discloses a technique of using a plurality of types of sensors and generating map data by fusing sensing information of the sensors.

### CITATION LIST

### PATENT DOCUMENT

Patent Document 1: Japanese Patent Application Laid-Open No. 2018-55695

### SUMMARY OF THE INVENTION

### PROBLEMS TO BE SOLVED BY THE INVENTION

Here, in order to implement a service using map data, it is conceivable to display a map based on the map data on a predetermined display device. For example, in the AR content providing service as described above, it is conceivable to display a graphical user interface (GUI) screen accompanied by map display as a GUI screen for setting a presentation position of the AR content in the target space.

However, at present, the map display is performed only to indicate the shape of an object scanned in the target space.

The present technology has been made in view of the above circumstances, and an object thereof is to improve information value of a map indicating a three-dimensional structure of a target space.

### SOLUTIONS TO PROBLEMS

An information processing apparatus according to the present technology includes a display processing unit that performs display processing of map data indicating a three-dimensional structure of a target space, the map data being generated on the basis of sensing information by at least one of a visible light camera or a distance measuring sensor, in which the display processing unit performs display processing of the map data on the basis of sensing information by a third sensor that is a sensor excluding the visible light camera and the distance measuring sensor.

The visible light camera means a camera that performs imaging by an imaging element configured to be able to receive visible light. The distance measuring sensor means a sensor that detects a distance to a target object. With the above configuration, it is possible to perform map display reflecting the sensing information, such as displaying a map including the sensing information by the third sensor and information estimated from the sensing information as a map indicating the three-dimensional structure of the target space.

Furthermore, an information processing method according to the present technology is an information processing method in an information processing apparatus that performs display processing of map data indicating a three-dimensional structure of a target space, the map data being generated on the basis of sensing information by at least one of a visible light camera or a distance measuring sensor, the information processing method including performing display processing of the map data on the basis of sensing information by a third sensor that is a sensor excluding the visible light camera and the distance measuring sensor.

Also with such an information processing method, effects similar to those of the information processing apparatus described above according to the present technology can be obtained.

### BRIEF DESCRIPTION OF DRAWINGS

Fig. 1 is a block diagram illustrating a schematic configuration of an AR service providing system as an embodiment according to the present technology.
Fig. 2 is an explanatory diagram of an example of an AR service provided to a user in the embodiment.
Fig. 3 is a diagram illustrating an image of map data according to the embodiment.
Fig. 4 is a block diagram illustrating a hardware configuration example of a computer apparatus as the embodiment.
Fig. 5 is a functional block diagram for describing functions of an information processing apparatus as the embodiment.
Fig. 6 is an explanatory diagram of map generation-related processing based on a captured image of a polarization camera in the embodiment.
Fig. 7 is an explanatory diagram of the map generation-related processing based on a captured image of a multi spectrum camera in the embodiment.
Fig. 8 is a diagram illustrating an example of an external light noise region in a target space.
Fig. 9 is an explanatory diagram of map data generation-related processing based on a captured image of a thermal camera in the embodiment.
Fig. 10 is a diagram according to the embodiment.
Fig. 11 is an explanatory diagram of the map generation-related processing based on sensing information of an EVS.
Fig. 12 is a diagram illustrating an example of a setting screen.
Fig. 13 is a diagram illustrating an example of a setting screen in a case where the multi spectrum camera is selected.
Fig. 14 is a diagram illustrating a display example of surface division information of a subject based on a captured image of the polarization camera.
Fig. 15 is a diagram illustrating a display example of information indicating a transparent portion.
Fig. 16 is a diagram illustrating a display example of information indicating a specific material portion estimated from a captured image of the multi spectrum camera.
Fig. 17 is a diagram illustrating another example of information display based on sensing information of the thermal camera.

### MODE FOR CARRYING OUT THE INVENTION

Hereinafter, embodiments of an information processing apparatus according to the present technology will be described in the following order with reference to the accompanying drawings.
<1. Outline of System>
   (1-1. Overall System Configuration)
   (1-2. Hardware Configuration>
<2. Processing as Embodiment>
   (2-1. Map Generation-Related Processing)
   (2-2. Display Processing)
<3. Modifications>
<4. Summary of Embodiment>
<5. Present Technology>

### <1. Outline of System>

### (1-1. Overall System Configuration)

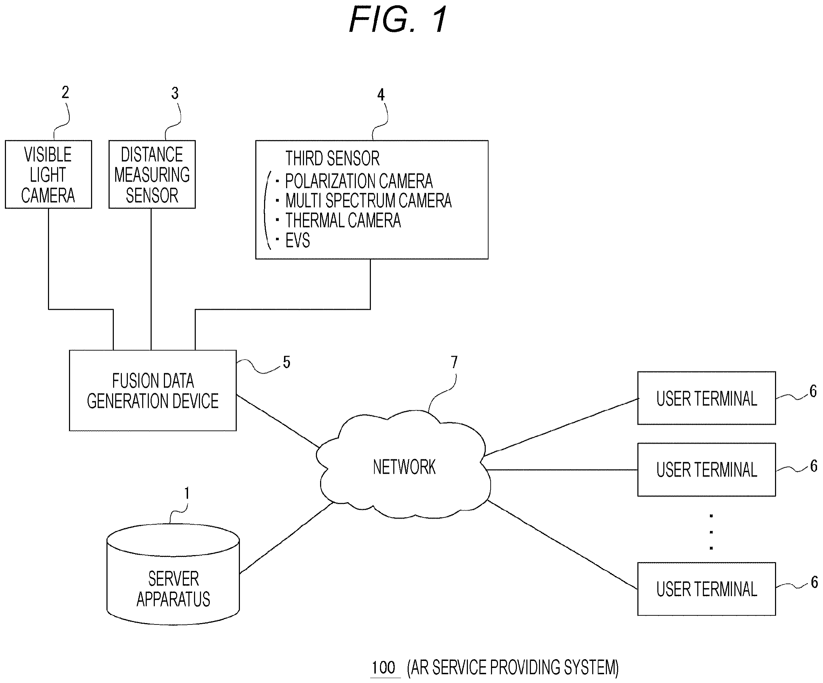

Fig. 1 is a block diagram illustrating a schematic configuration of an augmented reality (AR) service providing system 100 as an embodiment according to the present technology.

As illustrated, the AR service providing system 100 includes a server apparatus 1, a visible light camera 2, a distance measuring sensor 3, a third sensor 4, a fusion data generation device 5, and one or more user terminals 6.

In the AR service providing system 100, each of the server apparatus 1, the fusion data generation device 5, and the user terminal 6 is configured as a computer apparatus having a data communication function via a network 7 which is a communication network such as the Internet or a local area network (LAN), and the server apparatus 1, the fusion data generation device 5, and the user terminal 6 can perform data communication with each other via the network 7.

In addition, the fusion data generation device 5 is configured to be able to perform wired or wireless data communication with each of the visible light camera 2, the distance measuring sensor 3, and the third sensor 4, and can acquire sensing information of each of the visible light camera 2, the distance measuring sensor 3, and the third sensor 4.

The user terminal 6 is a computer apparatus assumed to be used by a user who is a receiver of an AR service provided in the AR service providing system 100. The user terminal 6 is configured as a portable computer apparatus, and for example, a device form such as a smartphone, a tablet terminal, a laptop type personal computer, a smart glass, or a head mounted display is conceivable.

In the present example, in order to be able to present AR content to be described later to the user, a display device capable of displaying an image is provided in the user terminal 6. The display screen of the display device is hereinafter referred to as a "display screen 6a".

In addition, the user terminal 6 is provided with a visible light camera for obtaining a real space captured image which is an image obtained by capturing a real space. Here, the visible light camera means a camera that performs imaging by an imaging element configured to be able to receive visible light.

Furthermore, in the present example, when receiving the AR service, the user terminal 6 is requested to perform self-position estimation. In order to enable the self-position estimation, for example, the user terminal 6 may be provided with a distance measuring sensor such as a light detection and ranging (LiDAR) sensor or a time of flight (ToF) sensor in addition to the above-described visible light camera. The distance measuring sensor is a sensor that detects a distance to an object.

The server apparatus 1 is a computer apparatus assumed to be used by a provider of the AR service described above.

The visible light camera 2 is a camera that performs imaging by an imaging element configured to be able to receive visible light. In the present example, the visible light camera 2 includes a color filter for individually receiving red (R) light, blue (B) light, and green (G) light, and is configured as an RGB camera that obtains a color image as a captured image on the basis of reception signals of the R light, the B light, and the G light.

The distance measuring sensor 3 detects a distance to an object. As the distance measuring sensor 3, for example, a sensor that performs distance measurement on the basis of a result of receiving reflected light of light emitted to an object, such as a LiDAR sensor or a ToF sensor, can be used. In this example, the ToF sensor is used as the distance measuring sensor 3. The ToF sensor here includes, as a light receiving unit that receives reflected light from an object, a light receiving unit having a pixel array unit in which a plurality of pixels having light receiving elements is arranged, and is configured to be able to obtain distance image data on the basis of a light receiving signal detected for each pixel by the light receiving unit.

Here, the distance image means information in which information indicating a distance is associated with each pixel.

The third sensor 4 represents a sensor other than the visible light camera 2 and the distance measuring sensor 3.

The fusion data generation device 5 is a device that generates fusion data obtained by fusing sensing information by a plurality of sensors as the visible light camera 2, the distance measuring sensor 3, and the third sensor 4.

Note that details of the third sensor 4 and the fusion data generation device 5 will be described later.

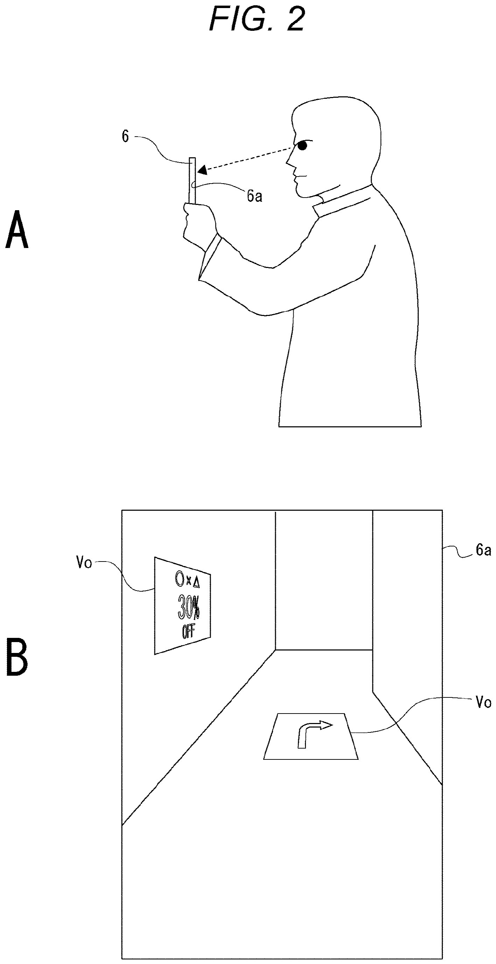

Here, an example of the AR service provided to the user will be described with reference to Fig. 2.

First, the AR content in the present example is content implemented by superimposing and displaying a virtual object Vo on the real space captured image in a state where the user terminal 6 displays the real space captured image described above on the display screen 6a (see Figs. 2A and 2B).

The AR service is a service that presents such AR content to the user.

Examples of the target space in which the user experiences AR include a space in which an artificial construction of various facilities is arranged, such as commercial facilities including a shopping mall, an amusement park, and the like, public facilities including a park and the like, and streets and the like. Alternatively, it is also conceivable to set a space in which a natural construction such as a cave is arranged as the target space.

As the virtual object Vo, for example, it is conceivable to present an object indicating advertisement information (for example, discount information such as "30% OFF" as exemplified in Fig. 2B, and the like) of a store in a commercial facility, an object indicating navigation information (for example, an arrow mark or the like illustrated in Fig. 2B) for guiding (navigating) to a predetermined destination, and the like.

In providing the AR service, for example, the AR service providing system 100 scans a target space such as a shopping mall as described above, and generates map data indicating a three-dimensional structure of the target space.

In the present example, the generation of the map data is performed by the server apparatus 1 on the basis of the sensing information of at least one of the visible light camera 2 or the distance measuring sensor 3. Specifically, map data generation in this case is performed by the server apparatus 1 on the basis of RGBD image data (D: Depth) obtained by using visible light image data obtained by the visible light camera 2 and distance image data obtained by the distance measuring sensor 3 (the ToF sensor in this example) as generation source data and fusing the visible light image data and the distance image data.

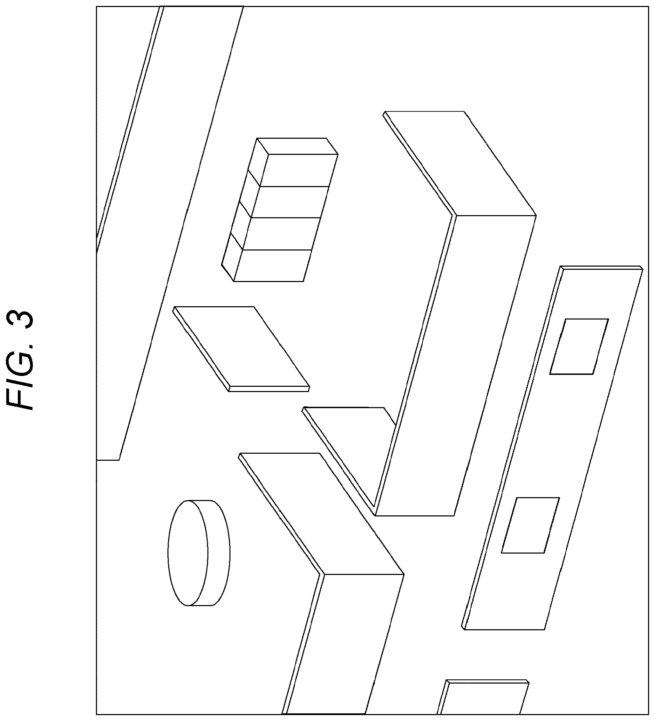

Fig. 3 illustrates an image of map data.

In generating the map data, for example, a mobile object such as a self-propelled robot (including a mode of a vehicle) or a drone is prepared. The visible light camera 2 and the distance measuring sensor 3 for target space scanning are mounted on the mobile object. By scanning the target space while moving the mobile object on which the visible light camera 2 and the distance measuring sensor 3 are mounted in the target space in this manner, map data indicating the three-dimensional structure of the target space as illustrated in Fig. 3 is generated.

The map data is generated as, for example, 3D model data indicating a position, a shape, and an attitude of an object scanned in a three-dimensional coordinate space.

A specific method for generating the map data is not particularly limited. As an example, it is conceivable to generate the map data by, for example, a technique of simultaneous localization and mapping (SLAM).

Note that the mobile object used for map data generation is not necessarily limited to a self-propelled mobile object, and for example, a method of moving by human power can also be employed.

The map data generated by the server apparatus 1 in this manner is used for various processes in the AR service. Specifically, in the present example, the map data is used for displaying a setting screen Gs for a service provider to set the arrangement position of the virtual object Vo in the target space. A map of the target space based on the map data is displayed on the setting screen Gs, and such a setting screen Gs enables the service provider to easily set the arrangement position of the virtual object Vo on the map.

For example, it is conceivable that the virtual object Vo as the advertisement information illustrated in Fig. 2B is presented at a predetermined position such as a wall of a target store, and in the case of the navigation information such as an arrow mark, it is conceivable that the presentation position of the virtual object Vo is set such that the corresponding virtual object Vo is presented at a predetermined position in the target space when the user is located at the predetermined position in the target space. In generating the AR content in this manner, it is assumed that the service provider performs setting work of the presentation position of the virtual object Vo in the target space.

Here, in the present example, the server apparatus 1 performs various types of display processing as an embodiment with respect to the display of the setting screen Gs, but details of the display processing will be described later.

Furthermore, in the present example, the map data generated by the server apparatus 1 is also used for self-position estimation performed by the user terminal 6 in the target space. By performing this self-position estimation, the user terminal 6 can present the virtual object Vo at a correct position in the target space.

In this example, an application (application program) for receiving the AR service is installed in the user terminal 6, and map data generated by the server apparatus 1 is stored in the user terminal 6. The user terminal 6 performs self-position estimation by SLAM with reference to the map data stored in this manner.

Here, in Fig. 1, the fusion data generation device 5 is assumed to be arranged at a site where the target space is scanned using the above-described mobile object.

Furthermore, it is assumed that the user terminal 6 is arranged in the target space in a period different from the period in which the scanning is performed as described above.

The server apparatus 1 is assumed to be arranged at a remote place with respect to the target space, for example, as a cloud server or the like.

### (1-2. Hardware Configuration)

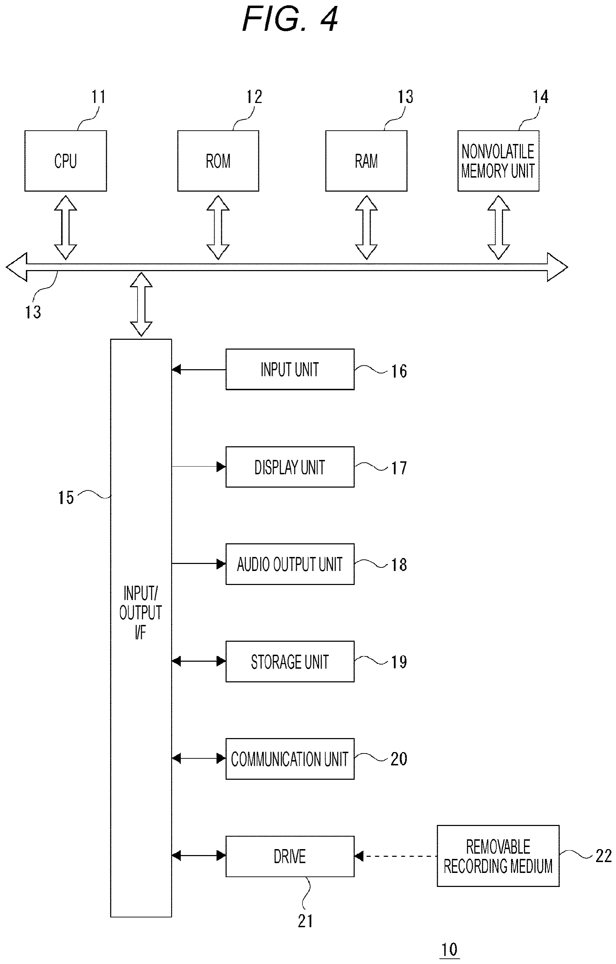

Each computer apparatus (information processing apparatus) as the server apparatus 1, the fusion data generation device 5, and the user terminal 6 illustrated in Fig. 1 can be implemented by a computer apparatus 10 having a hardware configuration as illustrated in Fig. 4.

As illustrated, the computer apparatus 10 includes a CPU 11. The CPU 11 executes various processes in accordance with a program stored in a nonvolatile memory unit 14 such as a ROM 12 or, for example, an electrically erasable programmable read-only memory (EEP-ROM), or a program loaded from a storage unit 19 to a RAM 13. As appropriate, the RAM 13 also stores data necessary for the CPU 11 to execute various processes, and the like.

The CPU 11, the ROM 12, the RAM 13, and the nonvolatile memory unit 14 are connected to each other via a bus 23. An input/output interface (I/F) 15 is also connected to the bus 23.

An input unit 16 including an operation element and an operation device is connected to the input/output interface 15. For example, as the input unit 16, various operation elements and operation devices such as a keyboard, a mouse, a key, a dial, a touch panel, a touch pad, and a remote controller are assumed.

Operation by a user is sensed by the input unit 16, and a signal corresponding to the input operation is interpreted by the CPU 11.

Furthermore, a display unit 17 including a liquid crystal display (LCD), an organic electro-luminescence (EL) panel, or the like, and an audio output unit 18 including a speaker or the like are integrally or separately connected to the input/output interface 15.

The display unit 17 is used for displaying various types of information, and includes, for example, a display device provided in a housing of the computer apparatus 10, a separate display device connected to the computer apparatus, or the like.

On the basis of an instruction from the CPU 11, the display unit 17 executes display of an image for various kinds of image processing, a moving image to be processed, or the like, on a display screen. In addition, the display unit 17 displays various types of operation menus, icons, messages, and the like, that is, displays as a graphical user interface (GUI) on the basis of the instruction from the CPU 11.

In some cases, a storage unit 19 including a hard disk drive (HDD), a solid-state memory, or the like, and a communication unit 20 including a modem or the like are connected to the input/output interface 15.

The communication unit 20 executes communication processing via a transmission path such as the Internet or performs wired/wireless communication with various types of devices, and communication using bus communication and the like.

A drive 21 is also connected to the input/output interface 15 as necessary, and a removable recording medium 22, such as a magnetic disk, an optical disk, a magneto-optical disk, or a semiconductor memory, is appropriately mounted.

A data file such as a program used for each process can be read from the removable recording medium 22 by the drive 21. The read data file is stored in the storage unit 19, and an image or audio included in the data file is output by the display unit 17 or the audio output unit 18. Furthermore, a computer program or the like read from the removable recording medium 22 is installed in the storage unit 19 as necessary.

In the computer apparatus 10 having the hardware configuration as described above, for example, software for the processing of the present embodiment can be installed via network communication by the communication unit 20 or the removable recording medium 22. Alternatively, the software may be stored in advance in the ROM 12, the storage unit 19, or the like.

When the CPU 11 performs processing operation on the basis of various programs, information processing and communication processing necessary as the server apparatus 1, the fusion data generation device 5, and the user terminal 6 described above are executed.

Note that the computer apparatus 10 is not limited to a single computer apparatus having the configuration as illustrated in Fig. 4, and may be configured by systematizing a plurality of computer apparatuses. The plurality of computer apparatuses may be systematized by a local area network (LAN) or the like, or may be disposed in a remote place by a virtual private network (VPN) or the like using the Internet or the like. The plurality of computer apparatuses may include a computer apparatus as a server group (cloud) that can be used by a cloud computing service.

Note that, in the case of application to the user terminal 6, the computer apparatus 10 is provided with various sensors (for example, a visible light camera, a distance sensor, an inertial measurement unit (IMU) sensor, or the like) used for the self-position estimation described above.

### <2. Processing as Embodiment>

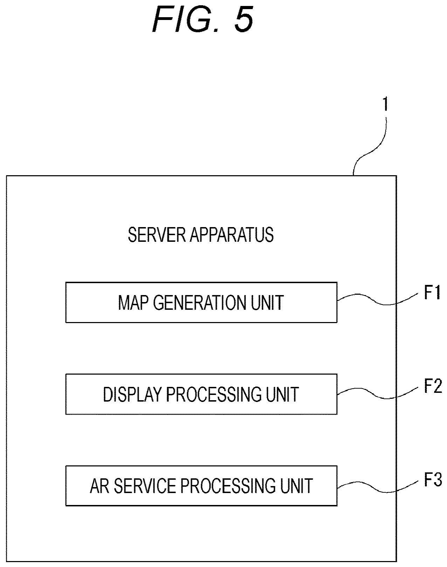

Fig. 5 is a functional block diagram for describing functions of the server apparatus 1 as the embodiment. In this example, the functions as the embodiments are implemented by software processing by the CPU 11 of the server apparatus 1.

As illustrated, the server apparatus 1 has functions as a map generation unit F1, a display processing unit F2, and an AR service processing unit F3.

The map generation unit F1 generates map data on the basis of sensing information from at least one of the visible light camera 2 or the distance measuring sensor 3 and sensing information from the third sensor 4. As described above, in the present example, the generation of the map data is performed by the server apparatus 1 on the basis of the RGBD image data obtained by using the visible light image data obtained by the visible light camera 2 and the distance image data obtained by the distance measuring sensor 3 (ToF sensor) as the generation source data and fusing the visible light image data and the distance image data. That is, the map generation unit F1 in this case generates map data on the basis of the sensing information by both the visible light camera 2 and the distance measuring sensor 3 and the sensing information by the third sensor 4.

Similarly to the visible light camera 2 and the distance measuring sensor 3, the third sensor 4 is mounted on the mobile object described above. Thus, the visible light camera 2, the distance measuring sensor 3, and the third sensor 4 move in conjunction with one another during scanning of the target space for generating map data.

Here, it is sufficient if at least a sensor other than the visible light camera 2 and the distance measuring sensor 3 is used as the third sensor 4, but in particular, in the present embodiment, an example in which a polarization camera, a multi spectrum camera, a thermal camera, or an event-based vision sensor (EVS) is used as the third sensor 4 will be described (see Fig. 1).

Here, the polarization camera means a camera configured to be able to acquire a polarization image indicating, for each pixel, polarization information with respect to reflected light from a subject.

In addition, the multi spectrum camera is a general term for cameras capable of capturing images in a plurality of wavelength bands, and includes not only what is generally called a multi spectrum camera but also what is called a hyper spectrum camera, and the like.

The thermal camera means a camera configured to be able to acquire a thermal image indicating the temperature of a subject for each pixel.

The EVS is a sensor having a pixel array unit in which a plurality of pixels having a light receiving element is arranged, and means a sensor that detects a change of a light reception amount by a predetermined amount or more as an event. The EVS may also be referred to as DVS (Dynamic Vision Sensor).

Note that, for the polarization camera, refer to Reference Document 1 below and the like. In addition, see Reference Document 2 and the like below for the multi spectrum camera, see Reference Document 3 and the like below for the thermal camera, and see Reference Document 4 and the like below for the EVS.
- Reference Document 1: Japanese Patent Application Laid-Open No. 2019-67323
- Reference Document 2: Japanese Patent Application Laid-Open No. 2021-12433
- Reference Document 3: Japanese Translation of PCT Application No. 2004-506354
- Reference Document 4: Japanese Patent Application Laid-Open No. 2021-103842

Here, the multi spectrum camera obtains a captured image for each of a plurality of wavelength bands, which can be rephrased as obtaining information of a light reception amount with respect to light of each wavelength band included in subject light (reflected light from a subject). From this point, it can be said that the captured image of the multi spectrum camera is wavelength analysis information of the subject light.

Here, in order to enable map data generation based on the sensing information of the visible light camera 2, the distance measuring sensor 3, and the third sensor 4 as described above, the fusion data generation device 5 illustrated in Fig. 1 generates fusion data obtained by fusing the sensing information of the visible light camera 2, the distance measuring sensor 3, and the third sensor 4. The fusion data mentioned here means at least data in a state in which the sensing information by the respective sensors of the visible light camera 2, the distance measuring sensor 3, and the third sensor 4 is included and the sensing information by these different sensors is synchronized in time.

The sensing information by the third sensor 4 as a polarization camera is information as a polarization image. In addition, the sensing information by the multi spectrum camera is information of a captured image for each of a plurality of wavelength bands, in other words, wavelength analysis information of subject light.

In addition, the sensing information by the third sensor 4 as the thermal camera is a thermal image, and the sensing information by the third sensor 4 as the EVS is an event detection image indicating a detection position of an event.

Note that, in a case where map data generation in the server apparatus 1 is performed by the SLAM technique as in the present example, an IMU sensor is provided as one of the third sensors 4. Data obtained by fusing information indicating the position and attitude (relative position and attitude) of the mobile object obtained by the IMU sensor and the visible light image data obtained by the visible light camera 2 and the distance image data obtained by the distance measuring sensor 3 is transferred from the fusion data generation device 5 to the server apparatus 1. The server apparatus 1 can generate the map data (environment map) by the SLAM technique on the basis of the information indicating the position and attitude of the mobile object transferred via the fusion data generation device 5 in this manner.

The map generation unit F1 in the server apparatus 1 performs generation processing of map data on the basis of the fusion data including the sensing information by the third sensor 4 as described above. An example of the generation processing of map data using the sensing information by such a third sensor 4 will be described later.

The display processing unit F2 performs display processing of map data indicating the three-dimensional structure of the target space generated on the basis of the sensing information by at least one of the visible light camera 2 or the distance measuring sensor 3.

Specifically, the display processing of map data in this case is performed as the display processing of the setting screen Gs described above. Here, the setting screen Gs is displayed on the display unit 17 (see Fig. 4) in the server apparatus 1.

In the present embodiment, the display processing unit F2 performs display processing of map data on the basis of the sensing information by the third sensor 4, and details of the display processing will be described later.

The AR service processing unit F3 performs various processes related to the AR service. For example, registration processing of account information of the user who receives provision of the AR service, distribution processing (for example, distribution of the application, the map data, and the like described above) of various types of information according to a request from the user terminal 6, and the like are performed.

### (2-1. Map Generation-Related Processing)

Hereinafter, processing (map generation-related processing) performed by the map generation unit F1 in generation of map data on the basis of the sensing information of the third sensor 4 will be described.

Here, corresponding map generation-related processing will be described for each of a case where the third sensor 4 is the polarization camera, a case where it is the multi spectrum camera, a case where it is the thermal camera, and a case where it is the EVS.

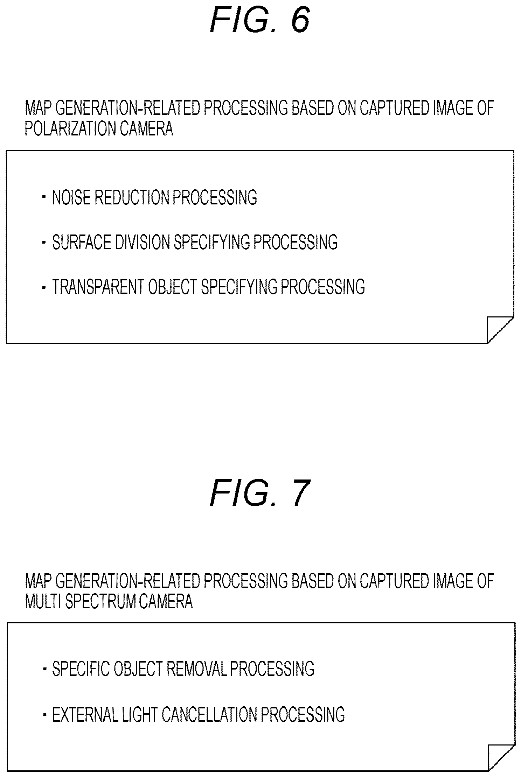

Fig. 6 is an explanatory diagram of the map generation-related processing based on a captured image of the polarization camera.

The map generation-related processing in this case can be rephrased as generation processing of map data based on the polarization information of subject light obtained by the polarization camera.

In this case, the map generation unit F1 performs noise reduction processing, surface division specifying processing, and transparent object specifying processing as processing based on the polarization information.

The noise reduction processing mentioned here is processing of reducing noise generated in the distance image obtained by the distance measuring sensor 3, specifically, multipath induced noise of reflected light from the subject. The distance measuring sensor 3 irradiates a distance measurement object with distance measurement light, and performs distance measurement on the basis of a result of receiving the reflected light. Specifically, the distance measurement is performed on the basis of the time from emission of the distance measurement light to reception of the reflected light. At this time, depending on the shape of the distance measurement target, a portion where the reflected light is reflected a plurality of times, in other words, a portion where multipath of the reflected light occurs is generated. In a portion where the multipath of the reflected light occurs, distance measurement information cannot be obtained correctly, and thus it is a noise portion in distance measurement.

The multipath of the reflected light is likely to occur at, for example, a boundary portion between surfaces such as a boundary portion between a floor surface and a wall surface. Therefore, as reduction processing of multipath induced noise, noise reduction processing based on normal direction information of the subject estimated from the polarization information by the polarization camera is performed. Here, the normal direction information of the subject means information indicating a normal direction (direction in which the surface faces) of a surface constituting the subject.

Note that, for a method of estimating the normal direction of the subject from the polarization information, refer to, for example, Reference Document 1 described above.

If the normal direction information of the subject can be specified, it is possible to estimate a region where the noise caused by the multipath occurs, such as the boundary between the floor surface and the wall surface as described above, in the distance image data. The map generation unit F1 corrects a distance value of a noise region estimated in this manner to a distance value obtained by linear interpolation or the like from a distance value of a surrounding non-noise region. Thus, it is possible to reduce the multipath induced noise.

Alternatively, the reduction processing of the multipath induced noise can be performed on the basis of surface division information of the subject estimated from the normal direction information of the subject. The surface division information of the subject means, for example, information indicating the division of a surface of the subject, such as divisions of the floor surface and the wall surface.

From such surface division information, it is possible to estimate the region where the noise caused by the multipath occurs, such as the boundary between the floor surface and the wall surface. The map generation unit F1 corrects the distance value of the noise region estimated in this manner to a distance value obtained by linear interpolation or the like from a distance value of a surrounding non-noise region.

The surface division specifying processing illustrated in Fig. 6 means that topology processing (processing of managing a spatial positional relationship between figures) for map data is performed on the basis of the surface division information of the subject described above.

It is possible to accurately manage the positional relationship between detected figures as compared with the case of performing the topology processing without using the surface division information of the subject.

Therefore, the accuracy of the map data can be improved.

The transparent object specifying processing is processing of estimating (specifying) a transparent object region in the subject on the basis of the polarization information.

Various methods are conceivable for estimating a transparent object region based on the polarization information. As an example, there is a method of estimating a transparent object region on the basis of a comparison result between a visible light image and a polarization image. Specifically, for example, a method of estimating a region in which there is no object in the visible light image but polarization information is detected in the polarization image as a transparent object region, and the like can be exemplified. Alternatively, it is also conceivable to estimate a transparent object region using artificial intelligence (AI) learned using the polarization image as learning data.

The map generation unit F1 generates map data on the basis of information of the transparent object region estimated on the basis of the polarization information as described above. Specifically, map data indicating that an object as a transparent object is present in the transparent object region is generated.

Thus, it is possible to reflect information of a transparent object region such as glass that is difficult to detect depending on the visible light image data in the map data, and the accuracy of the map data can be improved.

Fig. 7 is an explanatory diagram of the map generation-related processing based on a captured image of a multi spectrum camera.

The map generation-related processing in this case can be rephrased as generation processing of map data based on the wavelength analysis information of subject light obtained by the multi spectrum camera.

In this case, the map generation unit F1 performs specific object removal processing and external light cancellation processing as processing based on the wavelength analysis information of the subject light.

The specific object removal processing is processing based on material information of a subject estimated on the basis of the wavelength analysis information, and specifically, processing of removing a specific subject portion estimated from the material information, specifically, a plant portion in the present example, from the map.

Here, according to the wavelength analysis information of the subject light obtained by the multi spectrum camera, it is possible to estimate the material of the subject. This is because the wavelength characteristic of the reflected light can be different for each material. For example, a target material is determined in advance, and a portion having a wavelength characteristic that matches or is similar to the wavelength characteristic of reflected light of the target material is estimated as the specific subject portion. In a case where there is a plurality of target materials, processing based on matching or similarity of wavelength characteristics as described above is performed for each material, and the subject portion of each material is estimated.

Here, the map data generated by the map generation unit F1 as described above is referred to in the self-position estimation in the user terminal 6, but for example, because the shape and color of a plant portion such as a plant change with time, when the plant portion is included in the map data, a deviation from the map data generated by the user terminal 6 in the SLAM may occur, and the accuracy of the self-position estimation in the user terminal 6 may decrease.

By performing the processing of removing the plant portion from the map as described above, it is possible to suppress such a decrease in accuracy of self-position estimation in the user terminal 6.

Note that the portion to be removed from the map is not limited to the plant portion. Specifically, it is only required to estimate a portion that can be noise in self-position estimation based on map data on the basis of the material information, and to remove the portion from the map.

Here, the generation processing of the map data based on the wavelength analysis information of the subject light is not limited to the specific object removal processing as described above. For example, although illustration is omitted, the map generation unit F1 can also perform processing of generating map data to which material information of the subject estimated from the wavelength analysis information is added as accompanying information as processing of generating map data based on the wavelength analysis information of the subject light.

Thus, the map data more accurately representing the target space can be generated, and the accuracy of the map data can be improved.

The external light cancellation processing is processing of performing image correction for external light noise region estimated on the basis of the wavelength analysis information.

The external light noise region means, for example, a region irradiated with external light based on sunlight or the like at an intensity equal to or higher than a predetermined intensity.

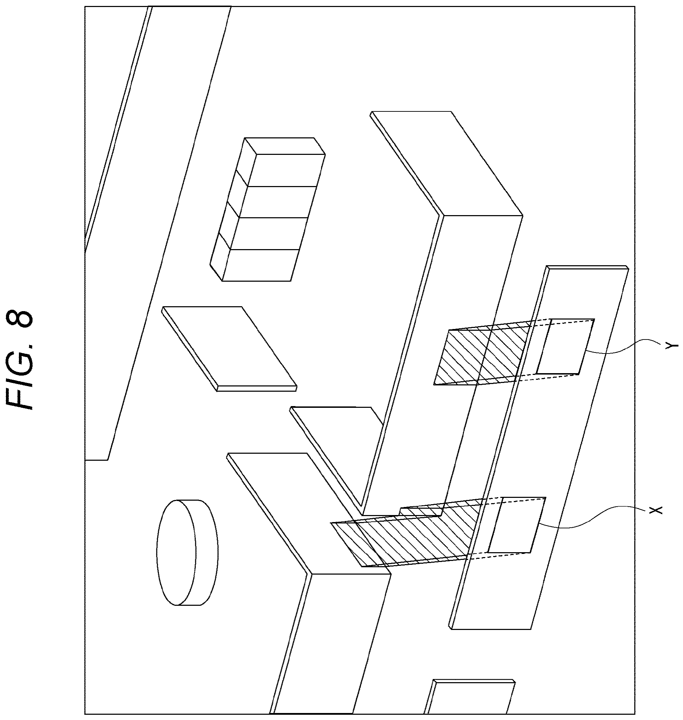

Fig. 8 is a diagram illustrating an example of an external light noise region in the target space.

In the drawing, portions indicated by "X" and "Y" represent transparent portions such as window glass provided in a building in a facility. In this case, when the external light is light with a shallow irradiation angle such as the afternoon sun in the evening, portions strongly irradiated with the external light are generated in a corridor portion and a wall portion in the building as indicated by hatched portions in the drawing. The portions strongly irradiated with the external light has a difference in brightness and color as compared with the surrounding portions, and thus map data in which the original color and brightness are not correctly reflected is generated for the portions. Due to this, there is a possibility that the accuracy of self-position estimation performed by the user terminal 6 with reference to the map data decreases.

Therefore, as the external light cancellation processing, the map generation unit F1 in this case estimates the external light noise region on the basis of the wavelength analysis information by the multi spectrum camera, and performs the image correction processing of the external light noise region so that the original brightness and color of the external light noise region are reproduced. For example, for the visible light image data used as the generation source data of the map data, correction to make the brightness and color of the external light noise region close to the brightness and color of the region around the external light noise region (including correction to the same color) is performed.

Thus, it is possible to make it difficult for the map data generated on the server apparatus 1 side to deviate from the map data generated by the user terminal 6 in the SLAM, and it is possible to suppress a decrease in the self-position estimation accuracy in the user terminal 6.

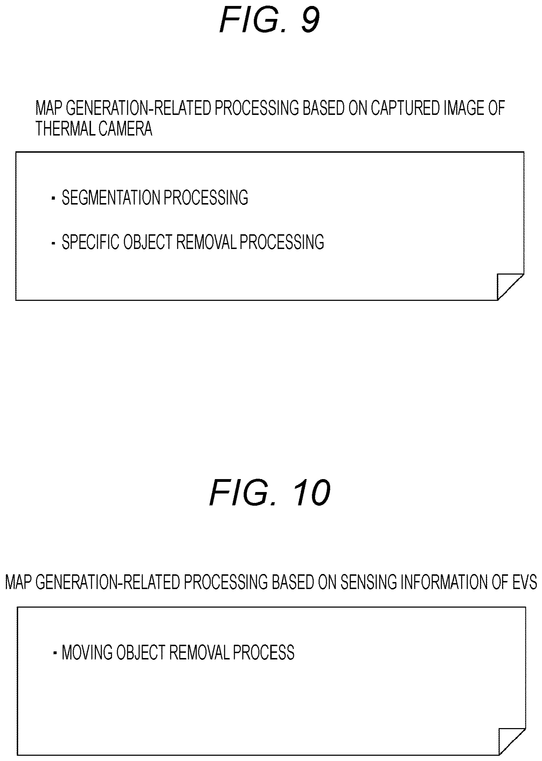

Fig. 9 is an explanatory diagram of map data generation-related processing based on a captured image of the thermal camera.

The map generation-related processing in this case can be rephrased as generation processing of map data based on temperature information of the subject obtained by the thermal camera.

In this case, the map generation unit F1 performs segmentation processing and the specific object removal processing.

The segmentation processing is processing of performing region division for each object in the target space. Here, it is possible to perform segmentation of the object (region division for each object) depending on the temperature information of the subject obtained by the thermal camera. This is because the temperature may vary from object to object.

The map generation unit F1 performs processing of estimating a region division for each object as segmentation processing on the basis of the temperature information of the subject obtained by the thermal camera, and performs processing of generating map data to which information indicating the estimated region division for each object is added as accompanying information.

Thus, the map data more accurately representing the target space can be generated, and the accuracy of the map data can be improved.

The specific object removal processing is processing of removing a specific subject portion having a specific temperature characteristic from the map. Specifically, in the present example, processing of estimating a portion that can be noise in self-position estimation based on map data, specifically, a person portion from the temperature information of the subject by the thermal camera and removing the person portion from the map is performed.

Thus, the accuracy of the map data used for self-position estimation can be improved.

Fig. 10 is an explanatory diagram of the map generation-related processing based on sensing information of the EVS.

As described above, since the EVS is a sensor that detects a change of the light reception amount by a predetermined amount or more as an event, it can be rephrased as a sensor that detects the motion of the subject.

In this case, the map generation unit F1 performs moving object removal processing as processing based on the sensing information of the EVS. Specifically, processing of detecting, for example, a moving object such as a person, an animal, or a vehicle on the basis of the sensing information of the EVS and removing the moving object from the map is performed.

The moving object such as a person, an animal, or a vehicle is a portion that can be noise in self-position estimation based on map data. Therefore, the accuracy of the map data can be improved by performing the processing of removing the moving object from the map as described above.

Here, with respect to the third sensor 4 such as the polarization camera, the multi spectrum camera, the thermal camera, and the EVS exemplified above, information estimated from the sensing information of these sensors, for example, information such as the normal direction information regarding the polarization camera, the surface division information, and the material information regarding the multi spectrum camera will be collectively referred to as "meta information".

In the example of the above description, generation of the meta information is performed by the server apparatus 1, but the generation of the meta information can also be performed on the fusion data generation device 5 side. In this case, data to which the meta information is added is transferred to the server apparatus 1 as the fusion data, and the server apparatus 1 performs various processes based on the meta information described above on the basis of the meta information.

Furthermore, in the above description, the map data generation processing based on the sensing information of each of the polarization camera, the multi spectrum camera, the thermal camera, and the EVS has been individually described, but all of the map data generation processing based on the sensing information of each of them can be combined or partially combined.

### (2-2. Display Processing)

Subsequently, processing of the display processing unit F2 illustrated in Fig. 5 will be described.

As described above, the display processing unit F2 performs display processing of map data on the basis of the sensing information by the third sensor.

Here, the map data to be displayed in this case is not limited to those generated by the generation processing based on the sensing information of the third sensor 4 exemplified above.

The display processing unit F2 performs processing of causing the display unit 17 to display a map including the sensing information by the third sensor 4 as a map indicating the three-dimensional structure of the target space.

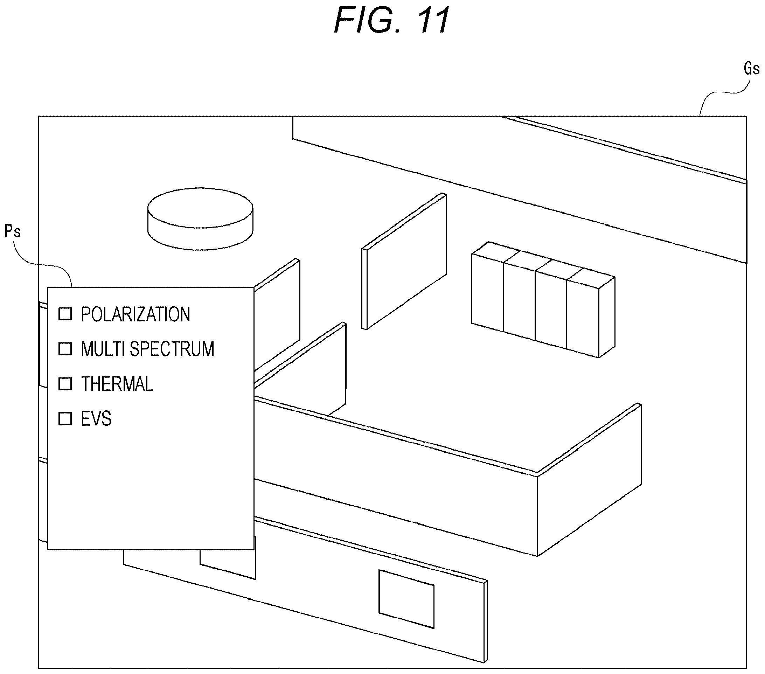

Display examples of the sensing information will be described with reference to Figs. 11 to 13.

Fig. 11 illustrates an example of the setting screen Gs.

As illustrated, on the setting screen Gs, an image as an operation receiving unit Ps for selecting which sensing information is to be displayed from among the polarization camera, the multi spectrum camera, the thermal camera, and the EVS provided as the third sensor 4 is displayed together with a map based on map data. As illustrated, check boxes for individually selecting the polarization camera, the multi spectrum camera, the thermal camera, and the EVS are arranged in the operation receiving unit Ps.

The display processing unit F2 in the present example performs display processing on the display unit 17 so that the sensing information of the sensor for which this check box has been operated is displayed on the map on the setting screen Gs.

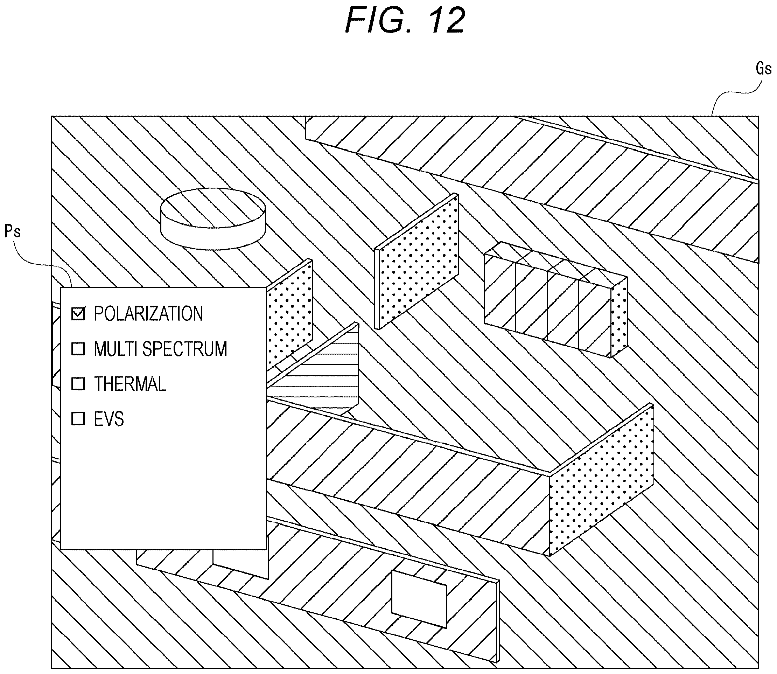

Fig. 12 illustrates an example of the setting screen Gs in a case where the polarization camera is selected. In this case, the polarization information obtained by the polarization camera is displayed on the map of the setting screen Gs. At this time, the display of the polarization information is performed such that a difference in the polarization angle indicated by the polarization information is expressed by the difference in the display mode (for example, using different patterns or different colors for each polarization angle, or the like) as exemplified in the drawing.

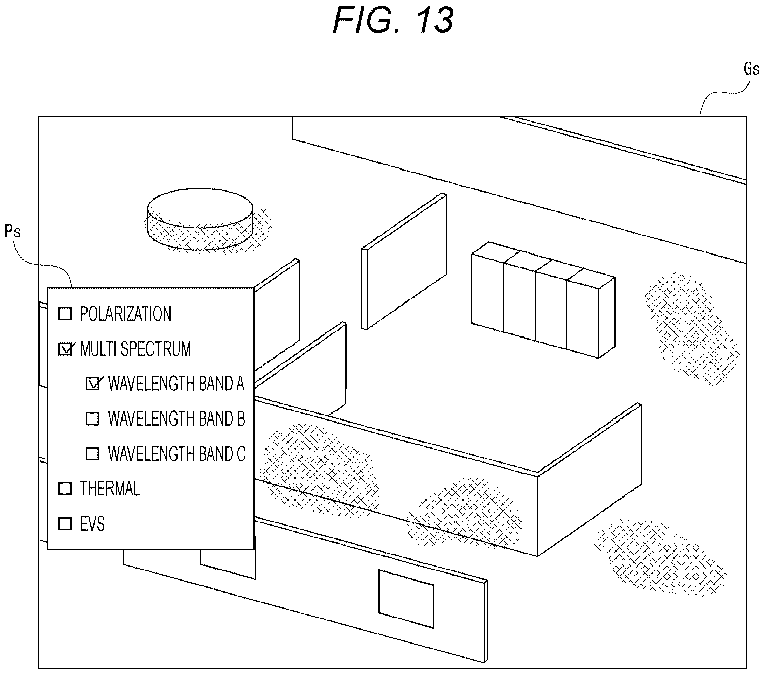

Fig. 13 illustrates an example of the setting screen Gs in a case where the multi spectrum camera is selected.

Regarding the sensing information by the multi spectrum camera, for example, it is conceivable to display information indicating the light reception amount for each wavelength band on the map. Although Fig. 13 illustrates an example of the operation receiving unit Ps corresponding to this case, and in the operation receiving unit Ps in this case, a check box is displayed for each selectable wavelength band in response to selection of the multi spectrum camera. In this case, the display processing unit F2 causes information indicating the light reception amount of the wavelength band corresponding to the check box selected from these check boxes to be displayed on the map on the setting screen Gs.

Note that, although not illustrated, it is sufficient if sensing information of the thermal camera and the EVS are also displayed on the map in a similar manner. For example, as the display of the sensing information by the thermal camera, it is conceivable to display information indicating a temperature distribution on the map. Furthermore, as the display of the sensing information of the EVS, it is conceivable to display information indicating a detection result of an event on the map.

By performing the display processing of the map data based on the sensing information of the third sensor 4 as described above, not only the information indicating the shape of the object specified from the sensing information of the visible light camera 2 or the distance measuring sensor 3 but also attribute information other than the shape of the object can be displayed as the map indicating the three-dimensional structure of the target space.

Therefore, the information value of the map can be improved.

In addition, the display processing unit F2 performs processing of causing the display unit 17 to display a map including information estimated from the sensing information by the third sensor 4.

As the information estimated from the sensing information, for example, in the case of the polarization camera, it is conceivable to display the surface division information of the subject estimated from a captured image of the polarization camera.

Furthermore, in the case of the multi spectrum camera, it is conceivable to display information indicating an existence region of a specific subject estimated from a captured image of the multi spectrum camera (information indicating an existence region of an object by a specific material).

Furthermore, in the case of the thermal camera, it is conceivable to display information indicating an existence region of a specific subject estimated from a captured image of the thermal camera.

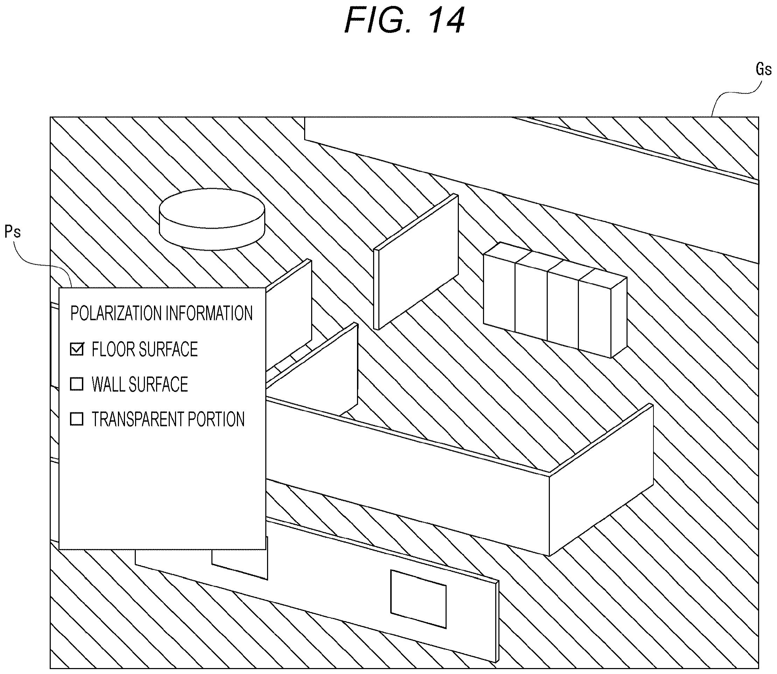

Fig. 14 illustrates a display example of the surface division information of the subject based on a captured image of the polarization camera.

In this case, in the operation receiving unit Ps, check boxes for selecting a floor surface, a wall surface, and a transparent portion (in the drawing, a transparent part) that can be estimated from the polarization information are displayed.

In a case where the check boxes of the floor surface and the wall surface are selected from these check boxes, the display processing unit F2 in this case performs processing of displaying information indicating the surface corresponding to the selected check box (hatched portion in the example in the drawing) on the map of the setting screen Gs.

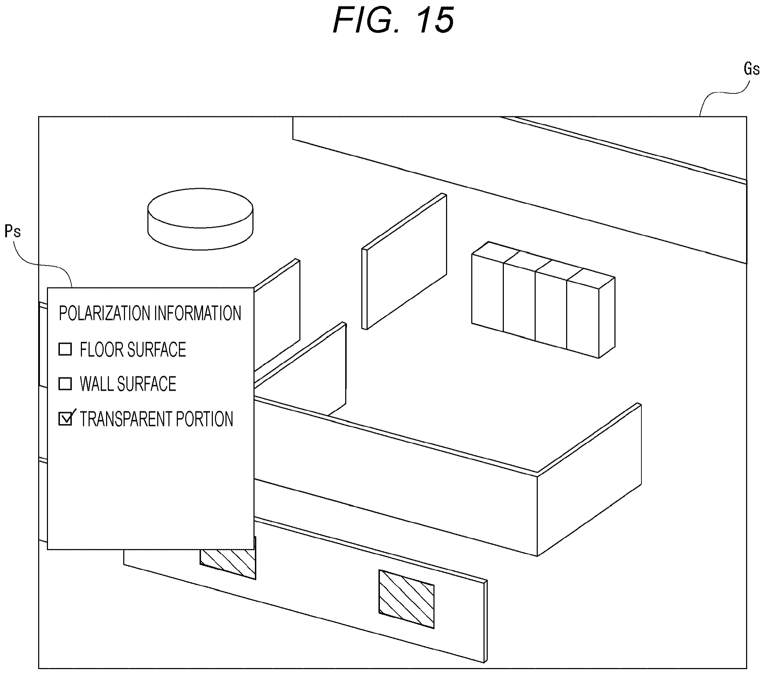

Furthermore, in a case where the check box of the transparent portion is selected, the display processing unit F2 performs processing of displaying information indicating the transparent portion estimated on the basis of the polarization information on the map of the setting screen Gs as illustrated in Fig. 15.

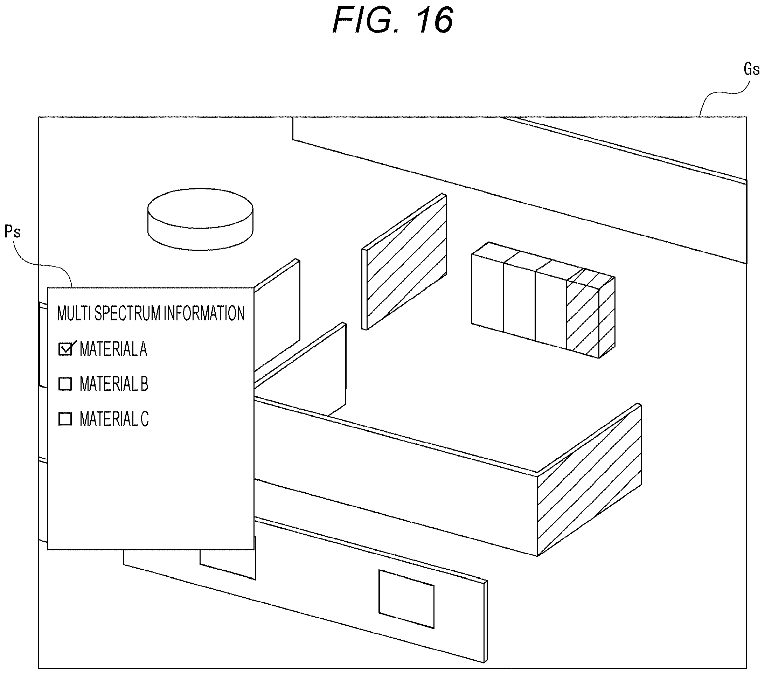

Fig. 16 illustrates a display example of information indicating a specific material portion estimated from a captured image of the multi spectrum camera.

In this case, a check box for selecting a material is displayed in the operation receiving unit Ps for each selectable material. The display processing unit F2 performs processing of displaying information (hatched portion in the example in the drawing) indicating the material portion corresponding to the check box selected among these check boxes on the map of the setting screen Gs.

Note that, although not illustrated, for the information indicating an existence region of a specific subject estimated from the captured image of the thermal camera, it is sufficient if information indicating an existence region of a specific subject is displayed for the selected specific subject in a similar manner to that in Fig. 16.

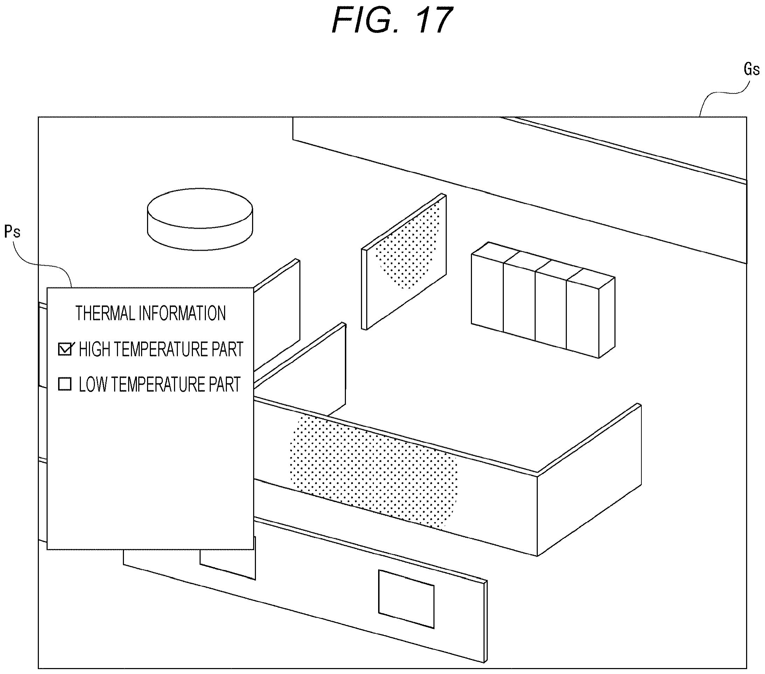

Note that, as the information display based on the sensing information of the thermal camera, for example, as in the example of Fig. 17, it is conceivable to enable selection of a temperature zone such as a high temperature part and a low temperature part, and display information indicating an area corresponding to the selected temperature zone on the map.

Here, the configuration of the setting screen Gs described above is merely an example, and the configuration is not limited thereto. For example, selection of information to be displayed can be implemented not by an operation on a check box but by another operation such as an operation of a button, for example.

Furthermore, in the above description, the sensing information and the information estimated from the sensing information are individually displayed, but both the sensing information and the information estimated from the sensing information can be displayed on the map.

At this time, for example, sensing information by different sensors and information estimated from the sensing information can be displayed on the map, such as displaying both of the sensing information of the multi spectrum camera as exemplified in Fig. 13 and the surface division information based on the sensing information of the polarization camera as exemplified in Fig. 14 on the map.

Furthermore, in the display processing of map data based on the sensing information of the third sensor 4, the information to be displayed on the map is not limited to the information exemplified above. For example, it is conceivable to display the normal direction information of the subject for the polarization camera. Furthermore, it is also conceivable to display information indicating the external light noise region for the multi spectrum camera.

### <3. Modifications>

Note that the embodiment is not limited to the specific example described above, and may be configured as various modifications.

For example, although the server apparatus 1 generates the map data in the above example, a configuration may be employed in which the map data is generated by a local device such as the fusion data generation device 5. In this case, the server apparatus 1 performs the display processing of map data based on the sensing information of the third sensor 4 on the basis of the map data generated on the local side.

Furthermore, in the above description, an example has been described in which the display processing and the generation processing of map data according to the present technology is applied to the processing for the map data related to the provision of the AR service, but the display processing and the generation processing of map data according to the present technology can be applied as, for example, processing for a wide variety of map data such as map data of a construction site or the like, map data for creating a game using the same map as the real world, and the like.

Furthermore, the display processing and the generation processing of map data according to the present technology can be suitably applied not only to the map data related to provision of the AR service but also to map data related to provision of a virtual reality (VR) service.

### <4. Summary of Embodiment>

As described above, the information processing apparatus (server apparatus 1) as an embodiment includes the display processing unit (same F2) that performs display processing of map data indicating a three-dimensional structure of a target space, the map data being generated on the basis of sensing information by at least one of a visible light camera (same 2) or a distance measuring sensor (same 3), and the display processing unit performs display processing of the map data on the basis of sensing information by the third sensor (same 4) that is a sensor excluding the visible light camera and the distance measuring sensor.

With the above configuration, it is possible to perform map display reflecting the sensing information, such as displaying a map including the sensing information by the third sensor and information estimated from the sensing information as a map indicating the three-dimensional structure of the target space.

Therefore, it is possible to display not only a shape of an object but also attribute information other than the shape of the object, such as a material and a type, as the map indicating the three-dimensional structure of the target space, and the information value of the map can be improved.

Furthermore, in the information processing apparatus as the embodiment, the display processing unit performs processing of causing a display unit (same 17) to display a map including the sensing information by the third sensor as a map indicating the three-dimensional structure of the target space.

Thus, it is possible to perform map display reflecting the sensing information by the third sensor, such as polarization information of subject light obtained in a case where the third sensor is a polarization camera, wavelength analysis information of subject light (reflected light from a subject) obtained in a case where the third sensor is a multi spectrum camera, or temperature information of the subject obtained in a case where the third sensor is a thermal camera, for example.

Therefore, the information value of the map can be improved.

Furthermore, in the information processing apparatus as the embodiment, the display processing unit performs processing of causing a display unit to display a map including information estimated from the sensing information by the third sensor as a map indicating the three-dimensional structure of the target space.

Thus, it is possible to perform map display including information estimated from the sensing information by the third sensor rather than the sensing information itself, such as displaying a map including surface division information of a subject estimated from polarization information of subject light obtained in a case where the third sensor is a polarization camera, for example.

Therefore, more specific information can be displayed as attribute information of an object, and the information value of the map can be further improved.

Furthermore, in the information processing apparatus as the embodiment, the third sensor includes a polarization camera, and the display processing unit performs processing of causing the display unit to display a map including surface division information of a subject estimated from a captured image of the polarization camera as the map indicating the three-dimensional structure of the target space.

According to the above configuration, it is possible to allow a viewer of the map to easily understand the information of surface division of the target space such as which region of the target space corresponds to a floor surface or a wall surface.

Furthermore, in the information processing apparatus as the embodiment, the third sensor includes a multi spectrum camera, and the display processing unit performs processing of causing the display unit to display a map including information indicating an existence region of a specific subject estimated from a captured image of the multi spectrum camera as the map indicating the three-dimensional structure of the target space.

In a case where a multi spectrum camera is used as the third sensor, it is possible to estimate, for example, an existence region of a specific subject such as a plant by wavelength analysis of subject light, and according to the above configuration, it is possible to display a map including information indicating the existence region of the specific subject estimated in this manner.

Therefore, for example, even in a case where it is difficult to identify the specific subject such as a plant only by the shape of an object displayed on the map, the existence region of the specific subject can be indicated to a map viewer, and the information value of the map can be improved.

Moreover, in the information processing apparatus as the embodiment, the third sensor includes a thermal camera, and the display processing unit performs processing of causing the display unit to display a map including information indicating an existence region of a specific subject estimated from a captured image of the thermal camera as the map indicating the three-dimensional structure of the target space.

In a case where a thermal camera is used as the third sensor, it is possible to estimate an existence region of a specific subject such as a person or an animal from temperature information of the subject, and according to the above configuration, it is possible to display a map including information indicating the estimated existence region of the specific subject.

Therefore, for example, even in a case where it is difficult to identify the specific subject such as a person or an animal only by the shape of an object displayed on the map, the existence region of the specific subject can be indicated to the map viewer, and the information value of the map can be improved.

Furthermore, the information processing apparatus as the embodiment includes a map generation unit (same F1) that generates the map data on the basis of the sensing information by at least one of the visible light camera or the distance measuring sensor and the sensing information by the third sensor.

As described above, the accuracy of the map data can be improved by generating the map data by using not only the sensing information by the visible light camera or the distance measuring sensor but also the sensing information by the third sensor.

Furthermore, in the information processing apparatus as the embodiment, the third sensor includes a polarization camera, and the map generation unit generates the map data on the basis of polarization information of subject light obtained by the polarization camera.

Thus, for example, it is possible to perform processing for improving the accuracy of the map data based on the polarization information in the process of generating the map data, such as performing reduction processing of multipath induced noise for the distance image data on the basis of normal direction information of a subject estimated from the polarization information of the subject light, or performing processing of reflecting information of a transparent object region estimated from the polarization information in the map data.

Therefore, the accuracy of the map data can be improved.

Moreover, in the information processing apparatus as the embodiment, the map generation unit generates the map data on the basis of normal direction information of a subject estimated from the polarization information.

According to the above configuration, it is possible to perform processing for improving the accuracy of the map data based on the normal direction information in the process of generating the map data, such as performing reduction processing of multipath induced noise for distance image data on the basis of the normal direction information itself or surface division information of the subject estimated from the normal direction information.

Therefore, the accuracy of the map data can be improved.

Furthermore, in the information processing apparatus as the embodiment, the map generation unit receives an input of distance image data obtained by the distance measuring sensor as generation source data of the map data, and performs reduction processing of multipath induced noise on the distance image data on the basis of surface division information of the subject estimated from the normal direction information in generation processing of the map data.

According to the above configuration, it is possible to reduce distance measurement noise caused by multipath of reflected light from a target object in distance measurement.

Therefore, the accuracy of the map data can be improved.

Furthermore, in an information processing apparatus as the embodiment, the map generation unit receives an input of visible light image data obtained by the visible light camera as generation source data of the map data, and generates the map data on the basis of information of a transparent object region estimated on the basis of the polarization information.

Thus, it is possible to reflect the information of the transparent object region such as glass, which is difficult to detect depending on the visible light image data, in the map data.

Therefore, the accuracy of the map data can be improved.

Moreover, in the information processing apparatus as the embodiment, the third sensor includes a multi spectrum camera, and the map generation unit generates the map data on the basis of wavelength analysis information of subject light obtained by the multi spectrum camera.

Thus, for example, it is possible to generate map data to which material information of the subject estimated from the wavelength analysis information of the subject light is added as accompanying information to enable generation of map data more accurately representing the target space, or it is possible to perform processing for improving the accuracy of the map data based on the wavelength analysis information in the process of generating the map data, such as performing processing of excluding a specific subject portion including a specific material such as a plant portion from the map or performing image correction processing of an external light noise region estimated from the wavelength analysis information.

Therefore, the accuracy of the map data can be improved.

Furthermore, in the information processing apparatus as the embodiment, the map generation unit generates the map data on the basis of material information of a subject estimated on the basis of the wavelength analysis information.

Thus, for example, it is possible to generate map data to which material information of the subject estimated from the wavelength analysis information of the subject light is added as accompanying information to enable generation of map data more accurately representing the target space, or it is possible to perform processing for improving the accuracy of the map data based on the material information, such as processing of removing a portion that can be noise in self-position estimation based on the map data, such as a plant portion from the map.

Therefore, the accuracy of the map data can be improved.

Furthermore, in the information processing apparatus as the embodiment, the map generation unit performs processing of removing a plant portion estimated on the basis of the wavelength analysis information in generation processing of the map data.

Thus, processing of removing a plant portion that can be noise in self-position estimation based on the map data from the map is performed.

Therefore, the accuracy of the map data used for self-position estimation can be improved.

Moreover, in the information processing apparatus as the embodiment, the map generation unit receives an input of visible light image data obtained by the visible light camera as generation source data of the map data, and performs image correction processing for an external light noise region estimated on the basis of the wavelength analysis information in generation processing of the map data.

According to the above configuration, it is possible to correct a portion that is inaccurate due to occurrence of the external light noise region in the map data to an accurate state.

Therefore, the accuracy of the map data can be improved.

Furthermore, in the information processing apparatus as the embodiment, the third sensor includes a thermal camera, and the map generation unit generates the map data on the basis of temperature information of a subject obtained by the thermal camera.

Depending on the temperature information, segmentation of an object (division of an object region) can be performed (because the temperature may be different for each object). According to the above configuration, for example, the processing for improving the accuracy of the map data can be performed on the basis of the division information of the object region specified by such segmentation.

Therefore, the accuracy of the map data can be improved.

Furthermore, in the information processing apparatus as the embodiment, the map generation unit generates the map data on the basis of division information of an object region estimated on the basis of the temperature information.

Thus, it is possible to perform processing for improving the accuracy of the map data on the basis of the division information of the object region for the object existing in the target space.

Therefore, the accuracy of the map data can be improved.

Moreover, in the information processing apparatus as the embodiment, the map generation unit performs processing of removing a person portion estimated on the basis of the temperature information in generation processing of the map data.

Thus, processing of removing a person portion that can be noise in self-position estimation based on the map data from the map is performed.

Therefore, the accuracy of the map data used for self-position estimation can be improved.

Furthermore, in the information processing apparatus as the embodiment, the third sensor includes an event-based vision sensor, and the map generation unit generates the map data on the basis of motion information of a subject obtained on the basis of sensing information of the event-based vision sensor.

According to the above configuration, it is possible to perform processing for improving the accuracy of the map data based on the motion information of the subject, such as processing of removing a moving object such as a person, an animal, or a vehicle from the map on the basis of the motion information of the subject obtained on the basis of the sensing information of the event-based vision sensor.

Therefore, the accuracy of the map data can be improved.

An information processing method as an embodiment is an information processing method in an information processing apparatus that performs display processing of map data indicating a three-dimensional structure of a target space, the map data being generated on the basis of sensing information by at least one of a visible light camera or a distance measuring sensor, the information processing method including performing display processing of the map data on the basis of sensing information by a third sensor that is a sensor excluding the visible light camera and the distance measuring sensor.

With such an information processing method, functions and effects similar to functions and effects of the information processing apparatus as the embodiment described above can be obtained.

Note that the effects described in the present specification are merely illustrative and are not limited, and other effects may be exerted.

### <5. Present Technology>

The present technology can also employ the following configurations.
(1) An information processing apparatus including:
   a display processing unit that performs display processing of map data indicating a three-dimensional structure of a target space, the map data being generated on the basis of sensing information by at least one of a visible light camera or a distance measuring sensor, in which
   the display processing unit performs display processing of the map data on the basis of sensing information by a third sensor that is a sensor excluding the visible light camera and the distance measuring sensor.
(2) The information processing apparatus according to (1) above, in which
   the display processing unit performs processing of causing a display unit to display a map including the sensing information by the third sensor as a map indicating the three-dimensional structure of the target space.
(3) The information processing apparatus according to (1) or (2) above, in which
   the display processing unit performs processing of causing a display unit to display a map including information estimated from the sensing information by the third sensor as a map indicating the three-dimensional structure of the target space.
(4) The information processing apparatus according to (3) above, in which
   the third sensor includes a polarization camera, and
   the display processing unit performs processing of causing the display unit to display a map including surface division information of a subject estimated from a captured image of the polarization camera as the map indicating the three-dimensional structure of the target space.
(5) The information processing apparatus according to (3) or (4) above, in which
   the third sensor includes a multi spectrum camera, and
   the display processing unit performs processing of causing the display unit to display a map including information indicating an existence region of a specific subject estimated from a captured image of the multi spectrum camera as the map indicating the three-dimensional structure of the target space.
(6) The information processing apparatus according to any one of (3) to (5) above, in which
   the third sensor includes a thermal camera, and
   the display processing unit performs processing of causing the display unit to display a map including information indicating an existence region of a specific subject estimated from a captured image of the thermal camera as the map indicating the three-dimensional structure of the target space.
(7) The information processing apparatus according to any one of (1) to (6) above, further including:
   a map generation unit that generates the map data on the basis of the sensing information by at least one of the visible light camera or the distance measuring sensor and the sensing information by the third sensor.
(8) The information processing apparatus according to (7) above, in which
   the third sensor includes a polarization camera, and
   the map generation unit generates the map data on the basis of polarization information of subject light obtained by the polarization camera.
(9) The information processing apparatus according to (8) above, in which
   the map generation unit generates the map data on the basis of normal direction information of a subject estimated from the polarization information.
(10) The information processing apparatus according to (9) above, in which
   the map generation unit receives an input of distance image data obtained by the distance measuring sensor as generation source data of the map data, and performs reduction processing of multipath induced noise on the distance image data on the basis of surface division information of the subject estimated from the normal direction information in generation processing of the map data.
(11) The information processing apparatus according to any one of (8) to (10) above, in which
   the map generation unit receives an input of visible light image data obtained by the visible light camera as generation source data of the map data, and generates the map data on the basis of information of a transparent object region estimated on the basis of the polarization information.
(12) The information processing apparatus according to any one of (7) to (11) above, in which
   the third sensor includes a multi spectrum camera, and
   the map generation unit generates the map data on the basis of wavelength analysis information of subject light obtained by the multi spectrum camera.
(13) The information processing apparatus according to (12) above, in which
   the map generation unit generates the map data on the basis of material information of a subject estimated on the basis of the wavelength analysis information.
(14) The information processing apparatus according to (13) above, in which
   the map generation unit performs processing of removing a plant portion estimated on the basis of the wavelength analysis information in generation processing of the map data.
(15) The information processing apparatus according to any one of (12) to (14) above, in which
   the map generation unit receives an input of visible light image data obtained by the visible light camera as generation source data of the map data, and performs image correction processing for an external light noise region estimated on the basis of the wavelength analysis information in generation processing of the map data.
(16) The information processing apparatus according to any one of (7) to (15) above, in which
   the third sensor includes a thermal camera, and
   the map generation unit generates the map data on the basis of temperature information of a subject obtained by the thermal camera.
(17) The information processing apparatus according to (16) above, in which
   the map generation unit generates the map data on the basis of division information of an object region estimated on the basis of the temperature information.
(18) The information processing apparatus according to (16) or (17) above, in which
   the map generation unit performs processing of removing a person portion estimated on the basis of the temperature information in generation processing of the map data.
(19) The information processing apparatus according to any one of (7) to (18) above, in which
   the third sensor includes an event-based vision sensor, and
   the map generation unit generates the map data on the basis of motion information of a subject obtained on the basis of sensing information of the event-based vision sensor.
(20) An information processing method in an information processing apparatus that performs display processing of map data indicating a three-dimensional structure of a target space, the map data being generated on the basis of sensing information by at least one of a visible light camera or a distance measuring sensor, the information processing method including:
   performing display processing of the map data on the basis of sensing information by a third sensor that is a sensor excluding the visible light camera and the distance measuring sensor.

### REFERENCE SIGNS LIST

- 1: Server apparatus
- 2: Visible light camera
- 3: Distance measuring sensor
- 4: Third sensor
- 5: Fusion data generation device
- 6: User terminal
- 6a: Display screen
- 7: Network
- 10: Computer apparatus
- 11: CPU
- 12: ROM
- 13: RAM
- 14: Nonvolatile memory unit
- 15: Input/output interface
- 16: Input unit
- 17: Display unit
- 18: Audio output unit
- 19: Storage unit
- 20: Communication unit
- 21: Drive
- 22: Removable recording medium
- 23: Bus
- F1: Map generation unit
- F2: Display processing unit
- F3: AR service processing unit
- Gs: Setting screen
- Ps: Operation receiving unit

## Claims

1. An information processing apparatus, comprising:
a display processing unit that performs display processing of map data indicating a three-dimensional structure of a target space, the map data being generated on a basis of sensing information by at least one of a visible light camera or a distance measuring sensor, wherein
the display processing unit performs display processing of the map data on a basis of sensing information by a third sensor that is a sensor excluding the visible light camera and the distance measuring sensor.

2. The information processing apparatus according to claim 1, wherein
the display processing unit performs processing of causing a display unit to display a map including the sensing information by the third sensor as a map indicating the three-dimensional structure of the target space.

3. The information processing apparatus according to claim 1, wherein
the display processing unit performs processing of causing a display unit to display a map including information estimated from the sensing information by the third sensor as a map indicating the three-dimensional structure of the target space.

4. The information processing apparatus according to claim 3, wherein
the third sensor includes a polarization camera, and
the display processing unit performs processing of causing the display unit to display a map including surface division information of a subject estimated from a captured image of the polarization camera as the map indicating the three-dimensional structure of the target space.

5. The information processing apparatus according to claim 3, wherein
the third sensor includes a multi spectrum camera, and
the display processing unit performs processing of causing the display unit to display a map including information indicating an existence region of a specific subject estimated from a captured image of the multi spectrum camera as the map indicating the three-dimensional structure of the target space.

6. The information processing apparatus according to claim 3, wherein
the third sensor includes a thermal camera, and
the display processing unit performs processing of causing the display unit to display a map including information indicating an existence region of a specific subject estimated from a captured image of the thermal camera as the map indicating the three-dimensional structure of the target space.

7. The information processing apparatus according to claim 1, further comprising:
a map generation unit that generates the map data on a basis of the sensing information by at least one of the visible light camera or the distance measuring sensor and the sensing information by the third sensor.

8. The information processing apparatus according to claim 7, wherein
the third sensor includes a polarization camera, and
the map generation unit generates the map data on a basis of polarization information of subject light obtained by the polarization camera.

9. The information processing apparatus according to claim 8, wherein
the map generation unit generates the map data on a basis of normal direction information of a subject estimated from the polarization information.

10. The information processing apparatus according to claim 9, wherein
the map generation unit receives an input of distance image data obtained by the distance measuring sensor as generation source data of the map data, and performs reduction processing of multipath induced noise on the distance image data on a basis of surface division information of the subject estimated from the normal direction information in generation processing of the map data.

11. The information processing apparatus according to claim 8, wherein
the map generation unit receives an input of visible light image data obtained by the visible light camera as generation source data of the map data, and generates the map data on a basis of information of a transparent object region estimated on a basis of the polarization information.

12. The information processing apparatus according to claim 7, wherein
the third sensor includes a multi spectrum camera, and
the map generation unit generates the map data on a basis of wavelength analysis information of subject light obtained by the multi spectrum camera.

13. The information processing apparatus according to claim 12, wherein
the map generation unit generates the map data on a basis of material information of a subject estimated on a basis of the wavelength analysis information.

14. The information processing apparatus according to claim 13, wherein
the map generation unit performs processing of removing a plant portion estimated on a basis of the wavelength analysis information in generation processing of the map data.

15. The information processing apparatus according to claim 12, wherein
the map generation unit receives an input of visible light image data obtained by the visible light camera as generation source data of the map data, and performs image correction processing for an external light noise region estimated on a basis of the wavelength analysis information in generation processing of the map data.

16. The information processing apparatus according to claim 7, wherein
the third sensor includes a thermal camera, and
the map generation unit generates the map data on a basis of temperature information of a subject obtained by the thermal camera.

17. The information processing apparatus according to claim 16, wherein
the map generation unit generates the map data on a basis of division information of an object region estimated on a basis of the temperature information.

18. The information processing apparatus according to claim 16, wherein
the map generation unit performs processing of removing a person portion estimated on a basis of the temperature information in generation processing of the map data.

19. The information processing apparatus according to claim 7, wherein
the third sensor includes an event-based vision sensor, and
the map generation unit generates the map data on a basis of motion information of a subject obtained on a basis of sensing information of the event-based vision sensor.

20. An information processing method in an information processing apparatus that performs display processing of map data indicating a three-dimensional structure of a target space, the map data being generated on a basis of sensing information by at least one of a visible light camera or a distance measuring sensor, the information processing method comprising:
performing display processing of the map data on a basis of sensing information by a third sensor that is a sensor excluding the visible light camera and the distance measuring sensor.
